# EUROPEAN PATENT SPECIFICATION

(11) **EP 0 608 057 B1**
(45) Date of publication and mention of the grant of the patent: **28.05.1997**
(21) Application number: 94300139.6
(22) Date of filing: 10.01.1994
(51) Int. Cl.: G21F 9/02

(54) **Iodine adsorbent for removing iodine from a gas**
Iod-Adsorptionsmittel zur Entfernung von Iod aus einem Gas
Adsorbant d'iode pour enlever l'iode d'un gaz

(30) Priority: 18.01.1993 JP 5919/93
(43) Date of publication of application: 27.07.1994
(73) Proprietor: HITACHI, LTD., Chiyoda-ku, Tokyo 101 (JP)
(72) Inventor: Kondo, Yoshikazu, Hitachi-shi, Ibaraki 316 (JP); Sugimoto, Yoshikazu, Hitachi-shi, Ibaraki 316 (JP); Fukasawa, Tetsu, Hitachi-shi, Ibaraki 316 (JP); Kawamura, Fumio, Mito-shi, Ibaraki 310 (JP); Funabashi, Kiyomi, Katsuta-shi, Ibaraki 312 (JP); Miura, Noboru, Hitachi-shi, Ibaraki 316 (JP)
(74) Representative: Paget, Hugh Charles Edward

(56) References cited:
- DE-A- 2 932 821
- DATABASE INIS INTERNATIONAL ATOMIC ENERGY AGENCY (IAEA), VIENNA, AT HOLLADAY, D.W. 'Literature survey: methods for the removal of iodine species from off-gases and liquid waste streams of nuclear power and nuclear fuel reprocessing plants, with emphasis on solid sorbents.'
- DATABASE WPI Week 9016, Derwent Publications Ltd., London, GB; AN 90-119048 & JP-A-2 068 140 (IND RES INST OF JAPAN) 7 March 1990
- DATABASE INIS INTERNATIONAL ATOMIC ENERGY AGENCY (IAEA), VIENNA, AT TAKESHITA, KENJI ET AL 'Adsorption of iodine by silver-impregnated hydrophobic adsorbent.'
- DATABASE WPI Week 7947, Derwent Publications Ltd., London, GB; AN 79-85198B & JP-A-54 133 299 (HITACHI)

## Description

This invention relates to an iodine adsorbent for removing iodine from a gas, and is particularly intended for use in removing radioactive iodine in elemental form or as a compound from exhaust gas discharged from a nuclear facility, such as a nuclear power plant, a nuclear fuel reprocessing plant and a radioactive isotope handling plant. The invention also provides an exhaust gas treatment apparatus containing the iodine adsorbent, and a method of treating an exhaust gas to remove iodine by contacting the gas with the adsorbent.

Known iodine adsorbents for exhaust gas treatment include an adsorbent in which a porous carrier is impregnated with iodine-adsorbent metal (especially silver) or a compound thereof. A porous carrier with a great number of large pores is disclosed in US-A-4234456, and a carrier wherein a much greater number of small pores are formed on the large pores is disclosed in EP-A-34037 (US-A-4382879).

Another known adsorbent has iodine adsorbent metal (silver) or a silver salt impregnated on a porous hydrophobic polymer (JP-A-2-68140). In another adsorbent the carrier is impregnated with a silver compound, which is converted into the silver compound having no deliquescence, (JP-A-54-133299).

All the known adsorbents mentioned aim to solve the problem of the iodine-adsorbing capacity being reduced under extremely humid conditions. US-A-4234456 and EP-A-34037 attempt to adjust the pore size to ensure that condensation of moisture in the pores under extremely humid conditions is reduced, thereby preventing the activity of the silver (or silver compound) from being lowered. JP-A-2-68140 uses the porous hydrophobic polymer carrier to minimize the moisture adhering to the carrier, with the same objective in mind.

JP-A-54-133299 pays attention to the fact that the pores are filled by expansion in volume due to delinquescence of silver nitrate and the adsorption rate is reduced; it employs the silver compound free from deliquescence to avoid deliquescence under extremely humid conditions, thereby seeking to prevent reduction of the iodine removing performance.

In Proc. 18th DOE Nuclear Airborne Waste Management and Air Cleaning Conference, CONF-840806, Vol. 2, pp. 1343-1360 (1984), the saturation level for adsorption of methyl iodide by a regenerated adsorbent impregnated with silver is noted to be reduced, if nitrogen oxides (NOx) are not present. However in the context of this article, this is not presented as a practical problem in the use of a silver-containing adsorbent, because conventionally the metallic silver of a regenerated silver adsorbent is converted to silver nitrate for use.

Exhaust gas treatment equipment using conventional iodine adsorbents exhibits excellent performance under normal conditions but the performance been known to decrease under highly humid conditions. It has been found by the present applicants that the silver salt in an adsorbent dissolves and re-crystallizes under extremely humid conditions, with the result that dust particles containing iodine may be carried away downstream. The iodine adsorbents disclosed in the prior art described above have failed to prevent reduction of the iodine removing performance under the most adverse conditions.

However, the requirements for the removal of methyl iodide in the absence of nitrogen oxides (NOx) and the removal of iodine under extremely humid conditions have not received much consideration or study, because of the extremely low possibility of their occurrence. To ensure greater safety and reliability of nuclear facilities in the future, it has become essential to enhance the function of the off-gas treatment equipment, namely the iodine-adsorbing performance even under such severe conditions. It is mentioned that methyl iodide is used as the representative example of organic iodine compounds which appear in exhaust gases, particularly gas from storage vessels, in which the NOx content is low.

The object of the present invention is to provide an iodine adsorbent which is capable of separating and removing iodine with high efficiency under severe conditions including both absence of nitrogen oxide (NOx) and extreme humidity.

The invention consists in an iodine adsorbent having at least two iodine-adsorbing components including a water-soluble component and a water-insoluble component. These two components cooperate mutually in their activity, and are associated with each other in the pores of the carrier, preferably mutually contacting each other. It has surprisingly been found that the water-insoluble component inhibits the removal of the water-soluble component from the pores of the carrier by water, thereby reducing or avoiding one problem of the prior art; on the other hand, the water-soluble component can be one which suffers little or even substantially no reduction of activity for adsorption of methyl iodide when the NOx content of the gas being treated falls to essentially zero. Good performance can be obtained even under the extreme conditions of high humidity, such as water deposit on the adsorbent, and very low NOx content.

It thus appears that the adsorbent of the invention is superior to a material, which is not itself disclosed in the prior art but which would be obtained by mixing carrier particles carrying a soluble iodine-adsorbing component with carrier particles carrying an insoluble iodine-adsorbing component.

The water-soluble and water-insoluble components in the adsorbent of the invention may be in respective layers of a layered structure, e.g. bulk layers or with one component as a thin layer covering the internal and/or external surface of a porous layer formed by the other component. Alternatively, the two components can be intimately mixed, preferably as a porous structure.

Primarily, the iodine-adsorbing components are within the pores of the porous carrier, which may be a carrier as described in EP-A-34037

The water-soluble and water-insoluble components may each contain a metal selected from Ag, Cu, Pb and Pd. The water-insoluble component may be a compound but preferably is the metal in elemental form, and the water-soluble component is generally a compound, preferably a salt. The total amount of the metal present in the adsorbent, in elemental or compound form is preferably at least 5% by weight. Particularly preferred are Ag as insoluble component and AgNO₃ as soluble component, but the invention is in principle applicable to all iodine-adsorbing elements and compounds, as will be apparent to the expert from the present disclosure.

The term "insoluble component" used herein includes poorly water-soluble compounds.

Preferably, the minimum amount of each of the soluble and insoluble components is 3 weight percent, while the maximum amount is 97 weight percent.

Preferably, when silver is present in the components, the amount of silver in the soluble silver compound, with respect to the total amount of silver, is 1 to 95%, more preferably 3 to 75%, and the amount of silver in the insoluble silver compound, with respect to the total amount of silver, is 99 to 5%, more preferably 97 to 25%.

Particularly, in the case of silver nitrate and metallic (elemental) silver, it is preferable that, based on the total silver content, the amount of silver in the silver nitrate is in the range 3 to 97%, while the amount of metallic silver is in the range 97 to 3%; it is more preferable that the amount of silver in the silver nitrate is in the range 7 to 85%, while that of metallic silver is in the range 15 to 93%.

Silver nitrate is mentioned as the preferred soluble silver compound, but other suitable soluble compounds include silver fluoride, silver chlorate, silver perchlorate, silver hexafluorophosphate, silver hexafluoroantimonate, silver tetrafluoroborate, silver acetate, diamine silver sulfate and potassium dicyano silver.

As well as metallic silver, suitable insoluble silver compounds include silver chloride, silver bromide, silver bromate, silver iodide, silver iodate, silver oxide, silver sulfide, silver sulfite, silver sulfate, silver thiosulfate, silver telluride, silver azide, silver nitrite, silver fulminate, silver phosphate, silver pyrophosphate, silver metaphosphate, silver arsenite, silver arsenate, silver acetylenide, silver carbonate, silver cyanide, silver isocyanate, silver thiocyanate, silver oxalate, silver chromate, silver dichromate, methyl silver and phenyl silver.

More than one component of each type may be provided, for example silver and silver oxide as insoluble components.

The effect of the present invention has been found to be independent of the positional relationship of the two or more components on the carrier. For example, the soluble component such as silver nitrate may be at the surface of the impregnated material, and the insoluble component such as silver close to the carrier. It is found that separation (solution) is not likely to occur easily despite the close position to the surface of the soluble components. The reason for this is at present unclear, but without being limited by theory it is considered to be because impregnation (adhesion) for the insoluble component is good, or because the soluble component layer is comparatively thin, resulting in increased van der Waal's force attraction in the fine pores of the carrier. Conversely, the soluble component such as silver nitrate may be close to the carrier and the insoluble component such as silver impregnated close to the surface; in this case the decontamination coefficient (DF) of methyl iodide is high in the absence of nitrogen oxides (NOx), although the insoluble component (metallic silver) is located close to the surface; this is considered to be because the materials are porous, allowing easier penetration of the methyl iodide into the silver nitrate layer. These considerations are thought to be of general application.

Embodiments of the present invention will now be described by way of example with reference to the accompanying drawings. In the drawings;-
Fig. 1A is a diagrammatic enlarged sectional view of a part of a particle of a first iodine adsorbent of the invention, and Fig. 1B is a further enlargement of detail B of Fig. 1A;
Fig. 2 is a graph showing results of a water test on iodine adsorbents;
Fig. 3 is a graph showing results of a test of methyl iodide adsorption;
Fig. 4 is a graph showing methyl iodide adsorption and separation of silver nitrate, relative to metallic silver content in an iodine adsorbent of the invention;
Fig. 5 is a view, similar to that of Fig. 1A, of a part of a particle of a second adsorbent of the invention; and
Fig. 6 is a view, similar to that of Fig. 1A, of a part of a particle of a third embodiment of the invention.

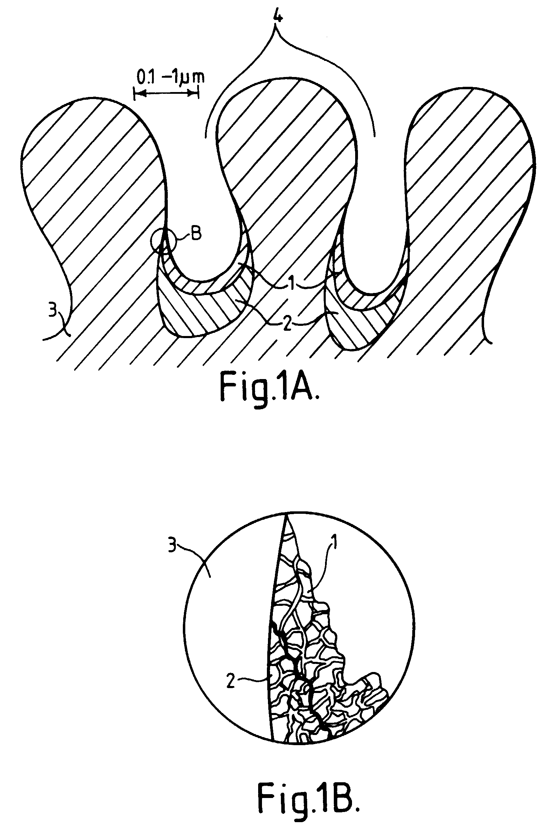

Off-gas treatment apparatus using the iodine adsorbent according to the present invention can be conventional, e.g. as described in Proc. 21st DOE/NRC Nuclear Air Cleaning Conf., CONF-900813, Vol. 1, pages 247-258 (1990). The iodine adsorbent of the invention is arranged in an adsorption column. Figs. 1A and 1B illustrate an iodine adsorbent of the invention in which active alumina particles are impregnated with metallic silver at about 70% and silver nitrate at about 30% (relative to total silver weight). Fig. 1 is a schematic representation of pores on a particle of the iodine adsorbent. Silver nitrate 1 and metallic silver 2 having a porous structure are impregnated inside pores 4 of the active alumina particle 3, which is the carrier. The silver nitrate 1 and metallic silver 2 cooperate with each other to work as the iodine adsorbent. Fig. 1B shows the porous layers 1,2 more enlarged.

The silver nitrate 1 and metallic silver 2 may be impregnated in any suitable way. For example, after impregnation of silver nitrate the compound is converted into metal silver 2, and then the alumina is impregnated with silver nitrate 1. In more detail, after having been dipped in a silver nitrate solution, the active alumina carrier 3 is dried; in this way the silver nitrate is impregnated into the pores of the alumina. This impregnated silver nitrate is reduced by hydrogen or nitrogen monoxide (NO), or is heated to about 450°C, to change it into the metallic silver layer 2. After that, the adsorbent is again dipped into silver nitrate solution, and dried. The silver nitrate is impregnated onto the surface of the metallic silver 2 inside the pores of the alumina. This process prepares the iodine adsorbent impregnated with silver nitrate 1 and metallic silver 2, having a porous structure as schematically represented in Figs. 1A and 1B.

The alumina adsorbent for example has a particle size in the range 0.5 to 3 mm, and a pore size in the range 50 nm to 2000 nm, more preferably 0.1 to 1 µm.

The present inventors have found out that, even under the severe conditions of both high humidity and absence of nitrogen oxides (NOx), iodine can be fixed onto the adsorbent, without the adsorbent performance being reduced, by an iodine adsorbent such as that of Figs. 1A and 1B, which is made by impregnating the active alumina (carrier) with both silver nitrate (a representative of a readily soluble silver compound) and metallic silver (a representative of an insoluble silver-containing component). Furthermore, this effect goes beyond the mere addition of the performance of an adsorbent impregnated with silver nitrate plus that of an adsorbent impregnated with metallic silver.

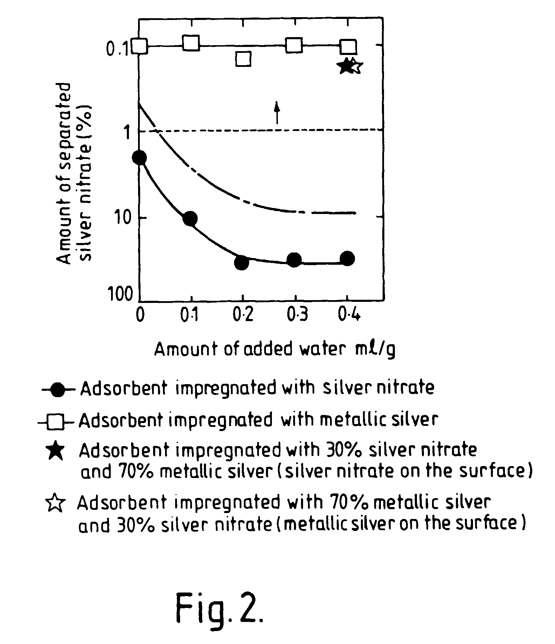

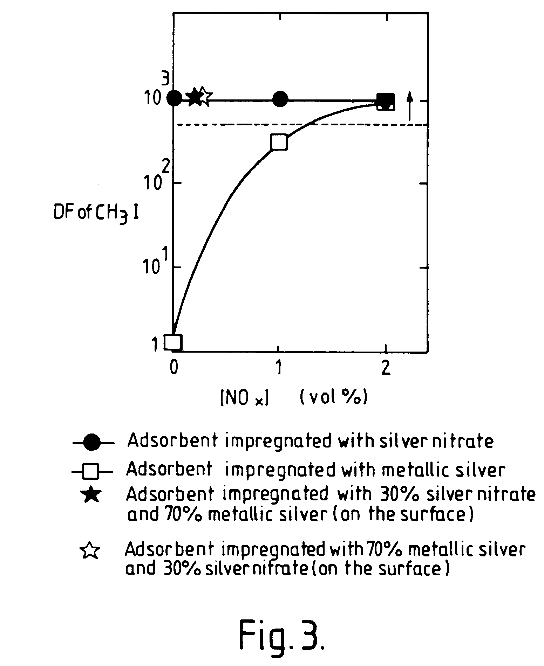

In Fig. 2, the amount of the silver (converted in terms of silver nitrate) separated from the iodine adsorbent relative to the overall weight of the adsorbent in a water test is plotted on the vertical axis, while the volume of water added to the adsorbent is plotted on the horizontal axis. In Fig. 3, the decontamination coefficient (DF: iodine concentration in the off-gas before treatment/iodine concentration in the off-gas after treatment) of methyl iodide (CH₃I) is plotted on the vertical axis, while the NOx concentration in off-gas is plotted on the horizontal axis.

Four types of adsorbents are compared; (1) an adsorbent impregnated with silver nitrate, (2) an adsorbent impregnated with metallic silver, (3) an adsorbent impregnated with silver nitrate at 30% and metallic silver at 70% according to the present embodiment, and (4) the adsorbent wherein the position of silver nitrate and metallic silver according to the present embodiment is reversed, namely, the adsorbent is impregnated with metallic silver of 70% at the surface and with silver nitrate of 30% at the alumina carrier. The weight of the impregnated silver is 24% with respect to the overall weight of the adsorbent in all cases. Desirably the weight of silver present is at least 5%.

These four adsorbents were prepared as follows. The carrier is alumina particles as described in EP-A-34037. Absorbent (1) is prepared by dipping the carrier in AgNO₃ solution, then drying. Adsorbent (2) is prepared by reducing all the silver nitrate of adsorbent (2) with H₂. Adsorbent (3) is prepared by dipping adsorbent (2) into AgNO₃ solution and drying. Adsorbent (4) is prepared by dipping the carrier into AgNO₃ solution, drying, and partially reducing the AgNO₃ with H₂. The contents of Ag and AgNO₃ in adsorbents (3) and (4) were determined by x-ray diffraction and chemical analysis. In adsorbent (4), the Ag is present on the surface of the pores of the porous AgNO₃ layer.

The test results of Fig. 2 were obtained by placing the adsorbent on a plate, spraying it with water in the amount indicated in Fig. 2, drying rapidly, and then shaking the adsorbent on a sieve which retains the adsorbent particles. Silver nitrate particles, separated due to dissolution in the water and recrystallization (presumably outside the pores of the carrier), pass through the sieve and are weighed, to give the amount separated.

For the results of Fig. 3, the adsorbent is packed in a column, as a 10 cm long body. A simulated off-gas containing CH₃I, NOx (as indicated in Fig. 3) and less than 1% H₂O, was passed for two hours, at 20 cm/s velocity at entry. The DF value was determined as the ratio of CH₃I concentration before and after adsorption.

In Figs. 2 and 3, the region above the broken line is that where the adsorbent performance is acceptable (target level).

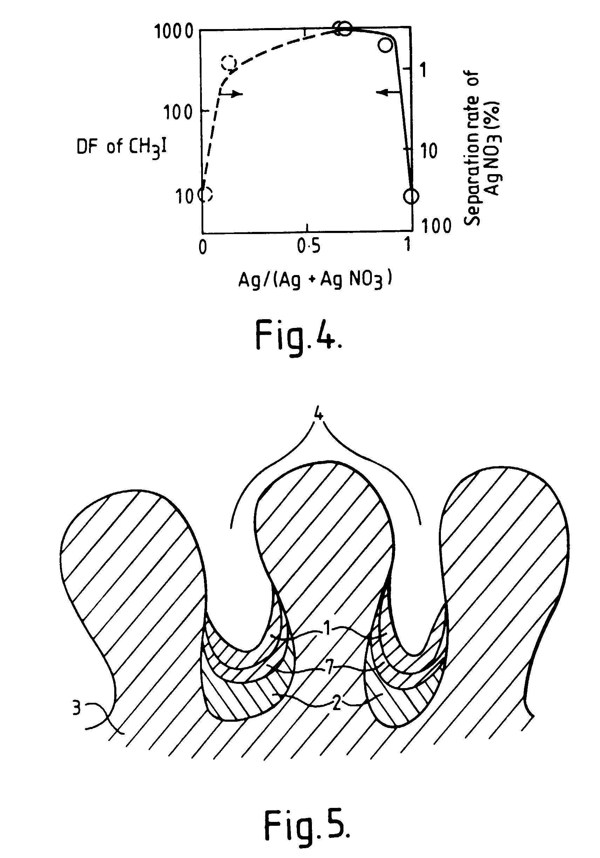

Figs. 3 and 4 show that the conventional adsorbents impregnated with silver nitrate or metallic silver alone fail to attain the target level at the same time under two types of severe conditions (Fig. 3: under extremely humid conditions. Fig. 4: in the absence of nitrogen oxides (NOx)). On the other hand, the two adsorbents of the invention succeeds in attaining the target under both types of severe conditions.

The chain-dot line in Fig. 2 shows a simple addition of the effect of the adsorbent impregnated with silver nitrate alone at 30% and the adsorbent impregnated with metallic silver alone at 70%. The adsorbents according to the present invention show performance which is greater than this mere addition. The separation (dissolution) of AgNO₃ does not easily occur despite the presence of silver nitrate close to the surface.

Fig. 4 shows the result of a silver mixture ratio test on the adsorbent of Figs. 1A and 1B. The ratio of metallic silver in the impregnated metallic silver and silver nitrate is plotted on the horizontal axis, while the decontamination coefficient (DF, given by a solid line) and separation rate of the silver nitrate (given by a broken line) are plotted on the vertical axis. The DF of methyl iodide should reach a guideline value of 20 or more, and more preferably, a target of 500 or more. On the other hand, the separation rate of the silver compound should reach a guideline value of 10% or less, or more preferably, a target of 1% or less.

From Fig. 4, the ratio of the silver nitrate is about 3% and 7% when the DF is 20 and 500, respectively. The ratio of the metallic silver at the separation rates of 10% and 1% is about 3% and 15%, respectively.

Thus, the guideline performance can be attained when each of Ag and AgNO₃ is present at 3% or more. If the amount of silver nitrate is 7% or more and that of metallic silver is 15% or more, the target performance can be achieved; this is, of course, more preferable.

The data of Fig. 4 apply also when the silver nitrate is impregnated close to the alumina carrier while metallic silver is impregnated at the surface, in reversal of Figs. 1A and 1B.

In the embodiment described, active alumina is used as the carrier. The same effect can be obtained by using as the carrier such porous materials as normal alumina, silica gel, zeolite or mordenite instead of alumina.

According to the present embodiment, silver nitrate and metallic silver are impregnated in laminar form (two layers). The same effect can be obtained by impregnating them in three or more layers or homogeneously (to be discussed later), or in any suitable manner.

The following describes a further embodiment of the present invention with reference to Fig. 5, of an iodine adsorbent impregnated with three types of silver component. The alumina carrier 3 carries layers of metallic silver 2, then silver oxide 7, finally silver nitrate 1. Impregnation can be carried out in many ways, and the following procedure can be taken as an example: firstly, the carrier is impregnated with silver nitrate, which is heated to 440°C or more to convert it into metallic silver. Then it is dipped in the solution of silver hydroxide and dried so as to be impregnated with the silver oxide. Finally, it is dipped in a solution of silver nitrate and dried so as to be impregnated with silver nitrate.

The adsorbent performance of the present embodiment is the same as that shown for the first embodiment. Namely, metallic silver and silver oxide prevent the reduction of the iodine fixing under the condition of extreme humidity, while the silver nitrate prevents the methyl iodine elimination rate from reducing under the condition of absence of nitrogen oxides (NOx) or moisture. Since silver oxide has an affinity to metallic silver and silver nitrate, bonding between the metallic silver and silver nitrate is reinforced through the intermediary of silver oxide.

In the present embodiment, the operation of impregnation is more complicated than in the case of impregnation with two types of silver compounds; the case of the present embodiment provides simultaneous control of separation of the impregnated silver and reduction in the organic iodine removing rate.

In this embodiment also, the amount of the silver contained in the soluble silver nitrate 1 is suitably 1 to 95% or preferably 3 to 75%, and the amount of insoluble silver contained in the metallic silver 2 and silver oxide 7 is suitably 99 to 5% or preferably 97 to 25% (relative to total silver).

The same effects can be obtained if the first impregnated silver compound is the same as the last impregnated silver compound, and using four or more layers.

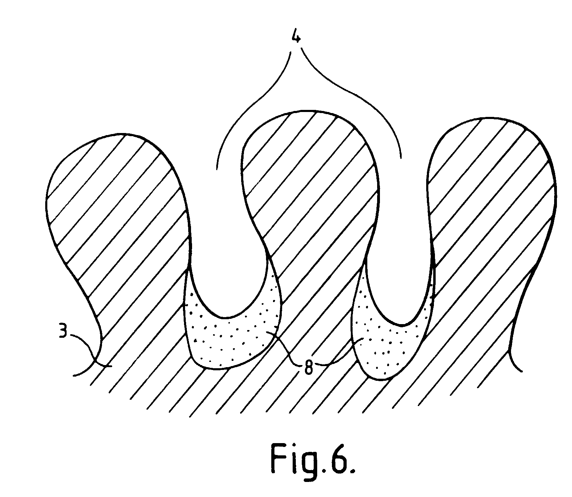

In the embodiment of the present invention of Fig. 6 the carrier of the iodine adsorbent is impregnated homogeneously with two types of silver components, as a single homogeneous layer, when viewed macroscopically. One way of preparing this adsorbent is to dip the carrier in a mixed silver solution (e.g. a mixture of silver nitrate solution and silver sulfate (dissolved and/dispersed), or a suspension of silver in the silver nitrate solution) and dry it quickly. The quick drying permits the pores of the adsorbent to be impregnated with two types of silver compounds almost simultaneously in a homogeneous form. When impregnation is required in multiple layers, it is possible to prepare the adsorbent impregnated with two types of silver compound layers in almost homogeneous form, by gradual impregnation in two types of thin layers.

The adsorbent impregnated homogeneously with two types of silver compounds provides the same effect as that of the adsorbent impregnated in a laminar form of the first embodiment.

The following is a brief description of several possible preparation processes of adsorbent of the present invention:
<1> The adsorbent carrier is dipped in the silver nitrate solution and is dried; then part of the impregnated silver nitrate is reduced by hydrogen (or other reducing agent). In this case, the surface layer of the silver nitrate is reduced and is made into the metallic silver.
<2> The carrier impregnated with silver nitrate is heated at 440°C for a short time to prepare the iodine adsorbent. In this case, the surface layer of the previously impregnated silver nitrate is reduced and is made into the metallic silver.
<3> After impregnated silver nitrate has been reduced, the surface is partially oxidized. In this case, a three-component system comprising silver nitrate (internal layer), metallic silver (intermediate layer) and silver oxide (external layer) will be formed if the silver nitrate is not wholly reduced.
<4> The impregnated silver nitrate is fully converted into metallic silver by heating or reduction; then silver nitrate is impregnated. In this case, two-component systems comprising metallic silver (internal layer) and silver nitrate (external layer) will occur if heating or reduction is sufficient.
<5> The carrier impregnated with silver nitrate is dipped in another solution, (e.g. NaOH or H₂SO₄) which converts it into another silver compound; then silver nitrate is again impregnated.
<6> The carrier is dipped in a suspension of Ag in AgNO₃ and is dried gradually. The insoluble silver which is easy to deposit is first impregnated into the carrier pores, and the readily soluble silver compound is then deposited on the silver. The two silver components can be homogeneously impregnated by quick drying.
<7> The impregnated silver nitrate is made to react with gas, which partly converts it into another silver compound.

The same effect as described for the present embodiments can be obtained using other iodine adsorbent metals such as copper, lead and palladium, as well as silver, or combinations of these metals.

## Claims

1. An iodine adsorbent for removing iodine from a gas, comprising a porous carrier and iodine-adsorbing material on the carrier, characterized in that the iodine-adsorbing material has at least two iodine-adsorbing components including a water-soluble iodine-adsorbing component and a water-insoluble iodine-adsorbing component.

2. An iodine adsorbent according to claim 1, wherein said water-soluble and water-insoluble components mutually contact each other.

3. An iodine adsorbent according to claim 2, wherein said water-soluble and water-insoluble components are in respective layers or are intimately mixed.

4. An iodine adsorbent according to any one of claims 1 to 3, wherein said water-soluble and water-insoluble components both contain silver.

5. An iodine adsorbent according to any one of claims 1 to 4, wherein said water-soluble component is silver nitrate.

6. An iodine adsorbent according to any one of claims 1 to 5, wherein said water-insoluble component is elemental silver.

7. An iodine adsorbent according to claim 4, wherein said water-soluble component is silver nitrate and said water-insoluble component is elemental silver, and the amount of the silver in the silver nitrate is in the range 7 to 85% (based on the total silver content) while the amount of elemental silver is in the range 93 to 15% (based on total weight of silver).

8. An iodine adsorbent according to any one of claims 1 to 7, which is free of adsorbed iodine.

9. Exhaust gas treatment apparatus for treating an exhaust gas to remove iodine, containing an iodine adsorbent according to any one of claims 1 to 8.

10. A method of treating an exhaust gas to remove iodine, wherein the exhaust gas is contacted with an iodine adsorbent according to any one of claims 1 to 8.

## Patentansprüche

1. Jod-Adsorptionsmittel zum Entfernen von Jod aus einem Gas mit einem porösen Träger und Jod adsorbierenden Material auf den Träger, **dadurch gekennzeichnet,** daß das Jod adsorbierende Material wenigstens zwei Jod adsorbierende Komponenten hat, die eine wasserlösliche Jod adsorbierende Komponente und eine wasserunlösliche, Jod adsorbierende Komponente enthalten.

2. Jod-Adsorptionsmittel gemäß Anspruch 1, wobei die wasserlöslichen und wasserunlöslichen Komponenten sich miteinander im Kontakt befinden.

3. Jod-Adsorptionsmittel gemäß Anspruch 2, wobei die wasserlöslichen und wasserunlöslichen Komponenten jeweils in Schichten ausgebildet oder gründlich gemischt sind.

4. Jod-Adsorptionsmittel gemäß einem der Ansprüche 1 bis 3, wobei die wasserlöslichen und wasserunlöslichen Komponenten beide Silber enthalten.

5. Jod-Adsorptionsmittel gemäß einem der Ansprüche 1 bis 4, wobei die wasserlösliche Komponente Silbernitrat ist.

6. Jod-Adsorptionsmittel gemäß einem der Ansprüche 1 bis 5, wobei die wasserunlösliche Komponente elementares Silber ist.

7. Jod-Adsorptionsmittel gemäß Anspruch 4, wobei die wasserlösliche Komponente Silbernitrat und die wasserunlösliche Komponente elementares Silber ist, und der Anteil an Silber im Silbernitrat im Bereich von 7% bis 85 % (bezogen auf den Gesamtsilberanteil) ist, während der Anteil an elementaren Silber im Bereich von 93% bis 15% (bezogen auf das Silbergesamtgewicht) ist.

8. Jod-Adsorptionsmittel gemäß einem der Ansprüche 1 bis 7, das frei von adsorbierten Jod ist.

9. Abgasbehandlungsgerät zum Behandeln von Abgas zum Entfernen von Jod, enthaltend ein Jod-Adsorptionsmittel gemäß einem der Ansprüche 1 bis 8.

10. Verfahren zum Behandeln von Abgasen, um Jod zu entfernen, wobei die Abgase in Kontakt mit einem Jod-Adsorptionsmittel gemäß einem der Ansprüche 1 bis 8 kommen.

## Revendications

1. Adsorbant d'iode destiné à enlever l'iode d'un gaz, comprenant un support poreux et un matériau adsorbant l'iode sur le support, caractérisé en ce que le matériau adsorbant l'iode comprend au moins deux composants adsorbant l'iode, à savoir un composant hydrosoluble adsorbant l'iode et un composant insoluble dans l'eau adsorbant l'iode.

2. Adsorbant d'iode selon la revendication 1, dans lequel lesdits composants hydrosoluble et insoluble dans l'eau sont en contact mutuel.

3. Adsorbant d'iode selon la revendication 2, dans lequel lesdits composants hydrosoluble et insoluble dans l'eau sont dans des couches respectives ou sont intimement mélangés.

4. Adsorbant d'iode selon l'une quelconque des revendications 1 à 3, dans lequel lesdits composants hydrosoluble et insoluble dans l'eau contiennent tous deux de l'argent.

5. Adsorbant d'iode selon l'une quelconque des revendications 1 à 4, dans lequel ledit composant hydrosoluble est du nitrate d'argent.

6. Adsorbant d'iode selon l'une quelconque des revendications 1 à 5, dans lequel ledit composant insoluble dans l'eau est de l'argent élémentaire.

7. Adsorbant d'iode selon la revendication 4, dans lequel ledit composant hydrosoluble est du nitrate d'argent et ledit composant insoluble dans l'eau est de l'argent élémentaire, la proportion d'argent dans le nitrate d'argent étant comprise dans la gamme de 7 à 85 % (par rapport à la teneur totale en argent), tandis que la proportion d'argent élémentaire est comprise dans la gamme de 93 à 15 % (par rapport au poids total d'argent).

8. Adsorbant d'iode selon l'une quelconque des revendications 1 à 7, qui est exempt d'iode adsorbé.

9. Dispositif de traitement d'un gaz d'évacuation, destiné à traiter un gaz d'évacuation afin d'en enlever l'iode, contenant un adsorbant d'iode selon l'une quelconque des revendications 1 à 8.

10. Procédé de traitement d'un gaz d'évacuation destiné à enlever l'iode, dans lequel le gaz d'évacuation est mis en contact avec un adsorbant d'iode selon l'une quelconque des revendications 1 à 8.
